# FASCICULE DE BREVET EUROPEEN

(11) **EP 0 856 641 B1**
(45) Date de publication et mention de la délivrance du brevet: **05.06.2002**
(21) Numéro de dépôt: 98400177.6
(22) Date de dépôt: 29.01.1998
(51) Int. Cl.: F01D 11/00

(54) **Système de ventilation des plates-formes des aubes mobiles**
Kühlungssystem für die Abdeckplatten von Rotorschaufeln
Cooling system for the shroud of rotor blades

(30) Priorité: 30.01.1997 FR 9700987
(43) Date de publication de la demande: 05.08.1998
(73) Titulaire: SNECMA MOTEURS, 75015 Paris (FR)
(72) Inventeur: Judet, Maurice, 77190 Dammarie Les Lys (FR); Marchi, Marc Roger, 77350 Le Mee (FR)

(56) Documents cités:
- WO-A-96/13653
- GB-A- 2 239 679
- US-A- 5 281 097
- US-A- 5 513 955

## Description

L'invention concerne les systèmes de ventilation des plates-formes des aubes mobiles des étages de turbine à gaz, et notamment le premier étage de turbine qui est le plus chaud.

Les compétitions industrielle et commerciale obligent les concepteurs et les fabricants de moteurs destinés à l'aviation à améliorer de façon continue les performances de ces produits.

Tout d'abord la réduction de la consommation spécifique de ces moteurs nécessite un fonctionnement à des températures à l'entrée des turbines situées au niveau le plus élevé possible. Le gain sur la consommation spécifique est d'autant plus important que le taux de compression du moteur est élevé, ce qui se traduit par une augmentation de la température à la sortie du ou des compresseurs. Cette augmentation de la température à l'entrée des turbines permet aussi d'accroître la poussée du moteur.

Les nouvelles conditions de fonctionnement permettent ainsi :
- de réduire la masse de carburant à emporter ou, à quantité égale de carburant, d'augmenter la distance franchissable de l'avion ;
- de réduire pour une poussée donnée du moteur la masse et les dimensions de ce dernier.

Mais cette augmentation de température est limitée par la tenue mécanique des aubes de distributeur et/ou des roues mobiles, car les propriétés mécaniques du matériau les constituant s'effondrent avec la température.

De plus, les aubes des roues mobiles sont soumises à des forces centrifuges élevées, du fait de la grande vitesse de rotation de la turbine. Afin de préserver leur intégrité, il est nécessaire d'assurer le refroidissement des parois de la pale de l'aube, ainsi que des plates-formes solidaires des aubes et qui délimitent le contour intérieur de la veine de gaz chauds traversant les espaces inter-pales.

La présente invention s'est donnée pour but d'optimiser les conditions de réalisation et d'utilisation des plates-formes inter-aubes, et de refroidir efficacement ces plates-formes.

De manière connue, les aubes de turbine sont fixées sur le pourtour d'un disque de rotor et comprennent traditionnellement sous une plate-forme un bulbe ou une racine, conformé par exemple en queue d'aronde, qui vient se loger dans une alvéole correspondante usinée dans le disque. Le bulbe est séparé de la plate-forme par une échasse qui s'étend radialement à la périphérie du disque.

La juxtaposition des aubes à la périphérie du disque, crée des cavités délimitées par les échasses, la périphérie du disque et les plates-formes et qui débouchent dans la veine des gaz chauds par les espaces séparant les plates-formes des aubes. Ces cavités peuvent être obturées à leurs extrémités amont et aval par des moyens d'obturation, sous forme d'anneaux par exemple fixés au disque, et être alimentées en air de refroidissement des plates-formes.

US-A-4 726 735 prévoit dans la paroi des plates-formes des fentes parallèles à l'axe de rotation de la turbine pour l'évacuation d'un air de refroidissement insufflé dans les cavités. Ce document ne précise pas, comment se fait l'étanchéité entre les plates-formes de deux aubes successives.

US-A-5 382 135 propose des orifices obliques dans la paroi de la plate-forme pour mettre en communication les cavités avec la veine de gaz chauds. Ces orifices débouchent au voisinage de la lisière axiale de la plate-forme coté intrados.

Dans les deux documents précédents, les trajets des fentes et des orifices sont relativement faibles ce qui se traduit par un échange de chaleur par convection faible entre le fluide de refroidissement et la paroi.

FR 2 726 323 prévoit des plaquettes d'étanchéité sous les plates-formes pour assurer l'étanchéité des intervalles inter plates-formes, afin d'éliminer les fuites, ces plaquettes étant appliquées contre la paroi des plates-formes sous l'action de la force centrifuge. Dans ce document, il n'est pas prévu de circuit de refroidissement des plates-formes.

US-A 5 281 087 prévoit un système de ventilation constitué par une plaquette placée sous la plate-forme d'aube, percée d'orifices amenant l'air sous la plate-forme dans des canaux comportant des collecteurs et évacuant l'air sur le bord de plate-forme dans l'intervalle séparant deux plates-formes.

L'invention est donc relative à un étage de turbine à gaz comprenant un disque monté rotatif autour d'un axe de rotation ;
une pluralité de logements de fixation, ménagés à la périphérie du disque ;
une pluralité d'aubes présentant chacune une racine susceptible d'être reçue dans l'un desdits logements de fixation, de manière à réaliser la fixation de l'aube sur le disque ;
chaque aube comportant en outre une plate-forme présentant deux lisières axiales et un voile, dénommé échasse, reliant la racine à la plate-forme, cependant que deux aubes adjacentes ont chacune l'une de leurs lisières axiales disposée en regard de, et adjacent à une lisière axiale de l'autre aube adjacente de manière à délimiter avec la périphérie du disque et les échasses desdites deux aubes adjacentes une cavité, lesdites lisières adjacentes délimitant entre elles un passage axial ;
des moyens d'obturation des extrémités axiales desdites cavités ;
des moyens pour insuffler de l'air de refroidissement dans lesdites cavités ;
des moyens de refroidissement desdites plates-formes avec l'air de refroidissement insufflé dans lesdites cavités,
cet étage de turbine à gaz comportant une pluralité de plaquettes d'étanchéité, chacune disposée dans une cavité et appliquée contre les faces internes des plates-formes adjacentes afin d'éviter les fuites d'air par le passage axial correspondant et lesdits moyens de refroidissement des plates-formes comportant une pluralité de circuits de ventilation réalisés sous forme de canaux ménagés dans la face interne de chaque plate-forme et recouverts par la face externe des plaquettes d'étanchéité, chaque canal comportant à l'une de ses extrémités un collecteur disposé en regard d'un orifice ménagé dans la plaquette d'étanchéité correspondante caractérisé par le fait que lesdits orifices communiquent avec la face externe de ladite plate-forme par une pluralité de trous évents repartis le long dudit canal et
les canaux se présentent sous la forme de serpentins qui s'étendent d'amont en aval dans le sens de l'écoulement des gaz chauds dans la turbine ;
chaque chaque serpentin comporte des portions rectilignes sensiblement parallèles reliées par des portions curvilignes, lesdites portions curvilignes étant disposées en alternance près de la lisière axiale de la plate-forme correspondante et près du corps de l'aube et
les trous évents débouchent dans les portions curvilignes.

De manière avantageuse, les collecteurs sont disposés à l'extrémité amont des canaux ;
les orifices ménagés dans les plaquettes d'étanchéité ont des dimensions supérieures aux dimensions des collecteurs.

D'autres avantages et caractéristiques de l'invention ressortiront à la lecture de la description suivante faite à titre d'exemple non limitatif et en référence au dessin annexé dans lequel :
la figure 1 est une coupe par un plan radial contenant l'axe de rotation d'une turbine de turbomachine conforme à l'invention ;
la figure 2 est une coupe selon un plan perpendiculaire à l'axe de rotation de la turbine de la figure 1 ;
la figure 3 est une vue de dessous des plates-formes de deux aubes adjacentes, dans laquelle le contour des pales est représenté.

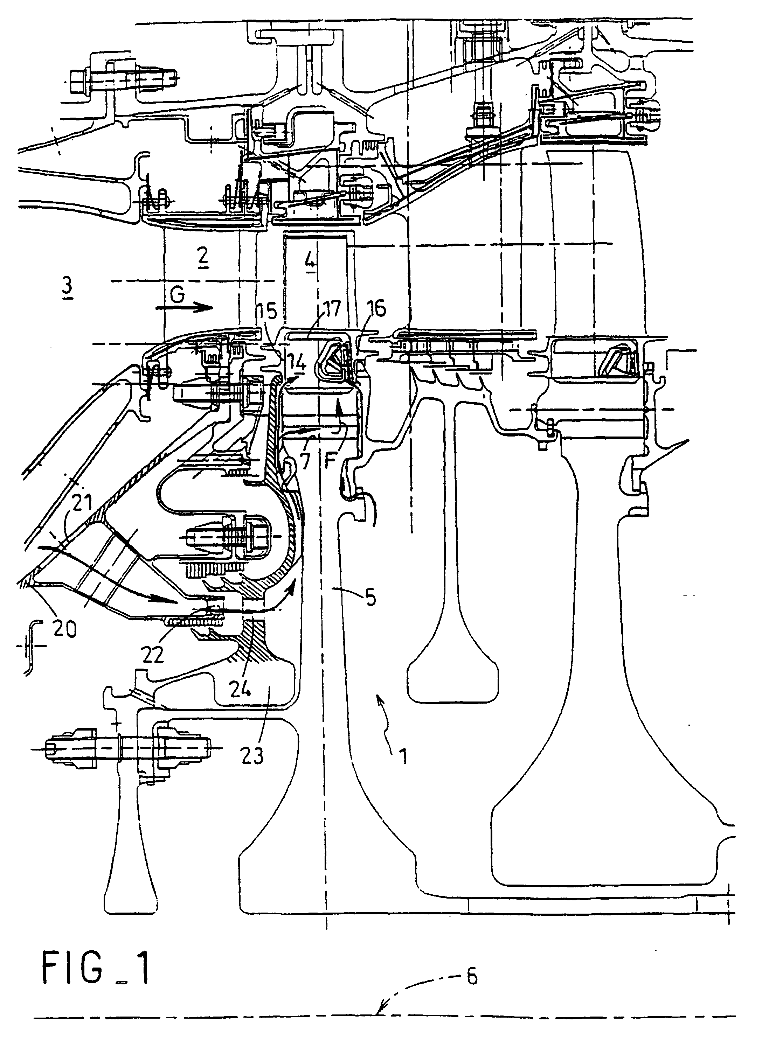

La figure 1 montre une turbine 1 à haute pression d'une turbomachine, disposée en aval d'une grille d'aubes fixes 2, elles mêmes disposées à la sortie d'une chambre de combustion 3.

La turbine 1 comporte des aubes 4 disposées radialement à la périphérie d'un disque 5 monté rotatif autour d'un axe de rotation 6. Le disque présente une pluralité d'alvéoles 7 destinées chacune à recevoir la racine 8 d'une aube 4. Les alvéoles 7 et les racines 8 présentent des formes complémentaires, en queue d'aronde ou analogue, de manière à réaliser la fixation des aubes 4 sur le disque 5.

Chaque aube 4 présente en outre une plate forme 10, présentant des lisières axiales 11a, 11b, sensiblement parallèles à l'axe de rotation 6, et un voile 12, dénommé échasse, reliant la racine 8 à la plate-forme 10. Deux aubes adjacentes 4a, 4b ont chacune l'une de leurs lisières axiales 11a disposée en regard de, et adjacente à la lisière axiale 11b de l'autre aube adjacente, et ces deux lisières adjacentes délimitent entre elles un passage axial 13.

Les plates-formes 10 sont disposées à distance de la périphérie du disque, et les échasses 12 de deux aubes adjacentes 4a, 4b, délimitent avec le disque 5 et les plates-formes adjacentes 10 de ces aubes, une cavité 14 dont les extrémités axiales sont obturées par des parois 15, 16, formées par exemple par des anneaux fixés de part et d'autre du disque 5 ou par des raidisseurs solidaires des échasses 12.

Dans chaque cavité 14 est montée une plaquette 17 qui recouvre la face inférieure ou interne des plates-formes 10 et qui obture le passage axial 13 séparant les lisières axiales adjacentes 11a, 11b. La face externe de la plaquette d'étanchéité 17 est plaquée contre la face interne des deux plates-formes adjacentes sous l'action notamment de la force centrifuge lorsque la turbine 1 est entraînée en rotation par le débit de gaz chauds G issus de la chambre de combustion 3.

Le refroidissement des plates-formes 10 est obtenu grâce à un débit d'air F plus froid que la température de la veine de gaz chauds. Ce débit d'air F peut être issu de la zone amont de la chambre de combustion 3, des compresseurs ou d'une autre source extérieure.

La figure 1 montre un exemple de réalisation, dans lequel l'air frais provient de la zone amont de la chambre de combustion 3. Cet air traverse le carter intérieur de chambre 20, par des orifices 21, 22, franchit le flasque 23 du labyrinthe amont de la turbine 1 par des perçages 24 et atteint les alvéoles 7 du disque 5, les racines 8 des aubes 4 et les cavités 14 par des alésages 25, 26 ménagés dans les racines 8, les alésages 25 permettant également l'alimentation des pales des aubes 4 en air de refroidissement.

L'air de refroidissement peut également provenir du compartiment aval 27 qui sépare la turbine à haute pression 1 de la turbine à basse pression située en aval.

Les cavités 14 peuvent être aussi alimentées en air de refroidissement par l'amont ou l'aval du disque 5, en fonction du choix technologique retenu pour la ventilation. Notamment, le flux d'air F peut circuler en amont par l'espace séparant le flasque 23 du labyrinthe amont du disque 5 ou, en aval, par l'espace séparant le disque 5 de la turbine à basse pression située en aval.

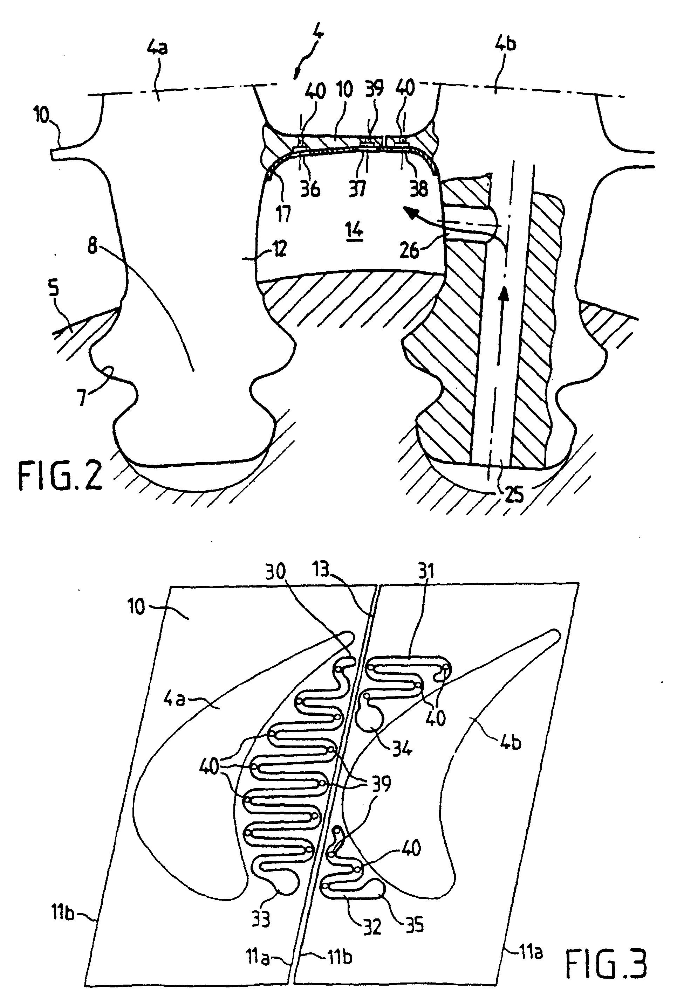

Ainsi qu'on le voit plus clairement sur les figures 2 et 3, chaque plate-forme 10 comporte plusieurs circuits de ventilation 30, 31, 32. Ces circuits sont formés par des canaux ou gorges usinés dans la face inférieure des plates-formes 10 et recouverts par les plaquettes d'étanchéité 17. Ces canaux serpentent pour avoir la plus grande longueur possible afin d'assurer au mieux l'échange de chaleur sur la plus grande surface.

Ils sont constitués par des tronçons rectilignes, sensiblement parallèles et perpendiculaires aux lisières axiales 11a, 11b, reliées par des tronçons curvilignes disposées alternativement le long des lisières axiales 11a, 11b et du corps des pales des aubes 4. Des collecteurs 33, 34, 35 sont ménagés respectivement à l'extrémité amont des canaux 30, 31, 32. L'arrivée d'air dans les circuits de refroidissement s'effectue au travers des plaquettes 17 par des orifices 36, 37, 38 qui débouchent respectivement dans les collecteurs 33, 34, 35.

Le débit d'air de refroidissement circulant dans les circuits 30, 31, 32 est ensuite évacué, par des trous évents 39, 40 traversant la paroi des plates-formes 10, dans la veine de gaz chauds G circulant entre les pales des aubes 4.

De manière avantageuse, les trous évents 39, 40 débouchent dans les tronçons curvilignes des circuits de ventilation 30, 31, 32 et les sorties des trous évents 39 sont disposées au voisinage des lisières 11a, 11b tandis que les sorties des trous évents 40 sont disposées au voisinage du pied des pales d'aubes 4.

Les dimensions des orifices 36, 37, 38 des plaquettes d'étanchéité 17 sont toujours plus grandes que celles des collecteurs 33, 34, 35 afin que les orifices et les collecteurs soient toujours en pleine communication, quel que soit l'empilage des tolérances de fabrication.

## Revendications

1. Etage de turbine à gaz comprenant un disque (5) monté rotatif autour d'un axe de rotation (6) ;
une pluralité de logements de fixation (7), ménagés à la périphérie du disque ;
une pluralité d'aubes (4) présentant chacune une racine (8) susceptible d'être reçue dans l'un desdits logements de fixation (7), de manière à réaliser la fixation de l'aube (4) sur le disque (5) ;
chaque aube (4) comportant en outre une plate-forme (10) présentant deux lisières axiales (11a, 11b) et un voile (12), dénommé échasse, reliant la racine (8) à la plate-forme (10), cependant que deux aubes adjacentes (4a, 4b) ont chacune l'une de leurs lisières axiales disposée en regard de, et adjacent à une lisière axiale de l'autre aube adjacente de manière à délimiter avec la périphérie du disque et les échasses desdites deux aubes adjacentes une cavité (14), lesdites lisières adjacentes (11a, 11b) délimitant entre elles un passage axial (13) ;
des moyens d'obturation des extrémités axiales desdites cavités (14) ;
des moyens pour insuffler de l'air de refroidissement dans lesdites cavités (14) ; et
des moyens de refroidissement desdites plates-formes avec l'air de refroidissement insufflé dans lesdites cavités (14), comportant une pluralité de plaquettes d'étanchéité (17), chacune disposée dans une cavité (14) et appliquée contre les faces internes des plates-formes (10) adjacentes afin d'éviter les fuites d'air par le passage axial correspondant (13), lesdits moyens de refroidissement des plates-formes (10) comportant une pluralité de circuits de ventilation (30, 31, 32) réalisés sous forme de canaux ménagés dans la face interne de chaque plate-forme (10) et recouverts par la face externe des plaquettes d'étanchéité (17), chaque canal comportant à l'une de ses extrémités un collecteur (33, 34, 35) disposé en regard d'un orifice (36, 37, 38) ménagé dans la plaquette d'étanchéité correspondante (17) **caractérisé par le fait que** lesdits orifices (36, 37, 38) communiquent avec la face externe de ladite plate-forme (10) par une pluralité de trous évents (39,40) répartis le long dudit canal et
**par le fait que** les canaux se présentent sous la forme de serpentins s'étendant d'amont en aval dans le sens de l'écoulement des gaz chauds dans la turbine, et
**par le fait que** chaque serpentin comporte des portions rectilignes sensiblement parallèles reliées par des portions curvilignes, lesdites portions curvilignes étant disposées en alternance près de la lisière axiale de la plate-forme correspondante (10) et près du corps de l'aube (4) et
**par le fait que** les trous évents (39,40) débouchent dans les portions curvilignes.

2. Etage de turbine selon la revendication 1, **caractérisé par le fait que** les collecteurs (33, 34, 35) sont disposés à l'extrémité amont des canaux.

3. Etage de turbine selon l'une quelconque des revendications 1 et 2, **caractérisé par le fait que** les cavités (14) sont alimentées en air de refroidissement par des alésages (25, 26) ménagés dans les racines (8) et échasses (12) des aubes (4).

4. Etage de turbine selon l'une quelconque des revendications 1 à 3, **caractérisé par le fait que** les orifices (36, 37, 38) ménagés dans la plaquette d'étanchéité (17) ont des dimensions supérieures aux dimensions des collecteurs (33, 34, 35).

## Patentansprüche

1. Gasturbinenstufe mit einer Scheibe (5), die um eine Drehachse (6) drehbar gelagert ist;
mit einer Vielzahl von Befestigungsaufnahmen (7), die an der Umfangslinie der Scheibe ausgeführt sind;
mit einer Vielzahl von Schaufeln (4), die jeweils eine Wurzel (8) aufweisen, die in einer dieser Befestigungsaufnahmen (7) aufgenommen werden können, so dass die Befestigung der Schaufel (4) an der Scheibe (5) gewährleistet ist;
wobei jede Schaufel (4) ferner eine Abdeckplatte (10) mit zwei axialen Rändern (11a, 11b) und einen Körper (12), genannt Strebe, der die Wurzel (8) mit der Abdeckplatte (10) verbindet, aufweist, während bei zwei aneinandergrenzenden Schaufeln (4a, 4b) jeweils der eine ihrer axialen Ränder gegenüber und angrenzend an einen axialen Rand der anderen angrenzenden Schaufel angeordnet ist, dergestalt dass von der Umfangslinie der Scheibe und den Streben dieser beiden aneinandergrenzenden Schaufeln ein Hohlraum (14) umgrenzt wird, wobei diese aneinandergrenzenden Ränder (11a, 11b) zwischen sich einen axialen Durchlass (13) bilden;
mit Verschlussmitteln für die axialen Enden dieser Hohlräume (14);
mit Mitteln, um Kühlungsluft in diese Hohlräume (14) zu blasen; und
mit Mitteln zum Kühlen der genannten Abdeckplatten mit Kühlungsluft, die in diese Hohlräume (14) geblasen wird,
wobei diese Gasturbinenstufe eine Vielzahl von Dichtungsplättchen (17) aufweist, die jeweils in einem Hohlraum (14) angeordnet sind und an den Innenseiten der angrenzenden Abdeckplatten (10) anliegen, um Luftlecks durch den entsprechenden axialen Durchlass (13) zu verhindern, und wobei diese Mitteln zum Kühlen der Abdeckplatten (10) aus einer Vielzahl von Kühlungskreisläufen (30, 31, 32) bestehen, die in Form von Kanälen in der Innenseite jeder Abdeckplatte (10) ausgeführt sind, die von der Außenseite der Dichtungsplättchen (17) bedeckt sind, wobei jeder Kanal an einem seiner Enden einen Kollektor (33, 34, 35) aufweist, der einer in dem entsprechenden Dichtungsplättchen (17) ausgeführten Öffnung (36, 37, 38) gegenüber angeordnet ist,
**dadurch gekennzeichnet,**
**dass** diese Öffnungen (36, 37, 38) über eine Vielzahl von Luftlöchern (39, 40), die entlang dieses Kanals verteilt sind, mit der Außenseite dieser Abdeckplatte (10) in Verbindung stehen, und dass die Kanäle in Schlangenlinien angeordnet sind, die sich in Strömungsrichtung der heißen Gase in der Turbine von vorne nach hinten erstrecken, und dass jede Schlangenlinie geradlinige Abschnitte aufweist, die im wesentlichen parallel zueinander liegen und durch gebogene Abschnitte verbunden sind, wobei diese gebogenen Abschnitte abwechselnd nahe bei dem axialen Rand der entsprechenden Abdeckplatte (10) und nahe bei dem Körper der Schaufel (4) angeordnet sind, und dass die Luftlöcher (39, 40) in die gebogenen Abschnitte münden.

2. Turbinenstufe nach Anspruch 1,
**dadurch gekennzeichnet,**
**dass** die Kollektoren (33, 34, 35) am vorderen Ende der Kanäle angeordnet sind.

3. Turbinenstufe nach einem der Ansprüche 1 und 2,
**dadurch gekennzeichnet,**
**dass** die Hohlräume (14) durch Bohrungen (25, 26), die in den Wurzeln (8) und den Streben (12) der Schaufeln (4) ausgeführt sind, mit Kühlungsluft versorgt werden.

4. Turbinenstufe nach einem der Ansprüche 1 bis 3,
**dadurch gekennzeichnet,**
**dass** die in den Dichtungsplättchen (17) ausgeführten Öffnungen (36, 37, 38) größere Abmessungen haben als die Kollektoren (33, 34, 35).

## Claims

1. Gas turbine stage comprising a disc (5) mounted so that it can rotate about an axis of rotation (6);
a number of fixing housings (7), formed at the periphery of the disc;
the number of blades (4) each having a root (8) which can be housed in one of the said fixing housings (7) so as to fix the blade (4) to the disc (5);
each blade (4) further comprising a platform (10) having two axial edges (11a, 11b) and a web (12), known as the pole connecting the root (8) to the platform (10), while two adjacent blades (4a, 4b) each have one of their axial edges arranged facing and adjacent to an axial edge of the other adjacent blade so as to delimit, with the periphery of the disc and the poles of the said two adjacent blades, a cavity (14), the said adjacent edges (11a, 11b) between them delimiting an axial passage (13);
means for blanking off the axial ends of the said cavities (14);
means for blowing cooling air into the said cavities (14); and
means of cooling the said platforms with cooling air blown into the said cavities (14), comprising a number of sealing plates (17), each arranged in a cavity (14) and pressed against the interior faces of the adjacent platforms (10) so as to avoid air leaks through the corresponding axial passage (13), the said means of cooling the platforms (10) comprising a number of ventilation circuits (30, 31, 32) produced in the form of ducts formed in the interior face of each platform (10) and covered by the exterior face of the sealing plates (17), each duct comprising, at one of its ends, a collector (33, 34, 35) positioned facing an orifice (36, 37, 38) formed in the corresponding sealing plate (17), **characterized in that** the said orifices (36, 37, 38) communicate with the exterior face of the said platform (10) via a number of vent holes (39, 40) distributed along the said duct, and **in that** the ducts are in the form of serpentines running from upstream to downstream in the direction of flow of the hot gases through the turbine, and **in that** each serpentine comprises roughly parallel straight portions connected by curved portions, the said curved portions being arranged in alternation near to the axial edge of the corresponding platform (10) and near to the body of the blade (4) and **in that** the vent holes (39, 40) open into the curved portions.

2. Turbine stage according to Claim 1, **characterized in that** the collectors (33, 34, 35) are arranged at the upstream end of the ducts.

3. Turbine stage according to either one of Claims 1 and 2, **characterized in that** the cavities (14) are supplied with cooling air by the bores (25, 26) formed in the roots (8) and poles (12) of the blades (4).

4. Turbine stage according to any one of Claims 1 to 3, **characterized in that** the orifices (36, 37, 38) formed in the sealing plate (17) have dimensions larger than the dimensions of the collectors (33, 34, 35).
